**Europäisches Patentamt**

**European Patent Office**

**Office européen des brevets**

(11) Numéro de publication: **0 166 663**
**B1**

(12) ## FASCICULE DE BREVET EUROPEEN

(45) Date de publication du fascicule du brevet:
**22.06.88**

(21) Numéro de dépôt: **85420087.0**

(22) Date de dépôt: **09.05.85**

(51) Int. Cl.⁴: **B 01 D 33/26**, B 01 D 33/38

(54) Dispositif d'alimentation par ruissellement de filtres rotatifs à disques.

(30) Priorité: **14.05.84 FR 8407830**

(43) Date de publication de la demande:
**02.01.86 Bulletin 86/1**

(45) Mention de la délivrance du brevet:
**22.06.88 Bulletin 88/25**

(84) Etats contractants désignés:
**DE GB IT NL**

(56) Documents cités:
**DE - C - 362 636**
**GB - A - 135 992**
**GB - A - 883 840**
**GB - A - 1 278 629**
**US - A - 1 666 279**

(73) Titulaire: **ALUMINIUM PECHINEY, 23, rue Balzac,
F-75008 Paris Cédex 08 (FR)**

(72) Inventeur: **Barra, Jean, Lou Claou, F-13120 Gardanne
(FR)**

(74) Mandataire: **Pascaud, Claude et al, PECHINEY 28, rue de
Bonnel, F-69433 Lyon Cedex 3 (FR)**

ACTORUM AG

# Description

L'invention concerne un dispositif d'alimentation d'un filtre rotatif à disques par ruissellement d'une suspension d'une phase solide dans une phase liquide permettant de maintenir le début de l'étape de filtration à la capacité maximale du filtre commandé par le distributeur réglant les diverses étapes de la séparation des phases à savoir: filtration, essorage et débatissage.

Depuis lontemps déjà, il est connu de réaliser la séparation par filtration d'une phase liquide, et d'une phase solide formant initialement une suspension résultant, par exemple, de l'attaque d'un minerai.

Pour ce faire, la suspension est amenée au-dessus d'un support, tel que grille, toile, membrane, etc... sur lequel les particules solides se déposent en formant un gâteau d'épaisseur variable, tandis que la phase liquide constituant le filtrat, passe à travers la texture de filtration puis est recueillie par tout moyen de collecte.

Selon les caractéristiques des suspensions à filtrer, telles que, par exemple, la concentration en matière sèche, la dimension des matériaux solides, l'aptitude à la séparation, l'agressivité du milieu, le degré de classification exigé, l'homme de l'art est amené à faire le choix d'un appareil approprié parmi les nombreuses technologies proposées sur le marché.

Parmi ces technologies de filtration décrites dans la littérature spécialisée, l'une d'entre elles est très souvent employée et appréciée dans le domaine de la séparation des phases liquide et solide de suspensions résultant des attaques de minerais selon les procédés hydrométallurgiques: cette technologie concerne les filtres rotatifs à disques, tels que ceux décrits, par exemple, dans «Chemical Engineer's Handbook», page 978 par John H. Perry, Edition n° 5 Graw Hill Book Company, 1950.

Tels qu'ils sont décrits, les filtres rotatifs à disques comportent une pluralité de disques fixés perpendiculairement à un arbre horizontal creux, constitués de canaux dans lesquels on pratique des effets divers tels que, aspiration, soufflage... Chaque disque est formé de plusieurs secteurs indépendants garnis de toiles métalliques et/ou de sachets textiles filtrants, raccordés à l'arbre horizontal creux précité.

Lors de l'opération de filtration, les disques, munis de leurs secteurs, plongent dans une auge contenant la suspension à filtrer, la phase solide étant collée par aspiration sur les toiles filtrantes, tandis que la phase liquide séparée s'écoule dans les collecteurs de l'arbre horizontal muni d'au moins un distributeur, au moyen de raccords existant entre chaque secteur et l'arbre lui-même. La phase solide disposée sur la toile filtrante est ensuite essorée lors du passage à l'aire libre, puis éliminée par soufflage d'air à contre-courant à travers les surfaces filtrantes.

Or, il est bien connu qu'une telle technologie de filtration ne peut plus fonctionner (pleinement) dès lors que la hauteur utile la plus faible de remplissage de l'auge correspond à une immersion insuffisante de la surface d'un disque. Dans ce cas, il se produit une rupture de l'aspiration de la phase liquide à travers le milieu filtrant du secteur qui compromet la séparation des deux phases et qui doit être combattue par un rehaussement rapide du niveau de la suspension dans l'auge.

Tous ces inconvénients ont, dès lors, conduit la demanderesse à étudier et créer un dispositif industriel d'alimentation en suspension des filtres rotatifs à disques, qui permette de maintenir le début de l'étape de filtration à la capacité maximale du filtre et d'opérer la séparation des phases filtration et essorage avec une hauteur utile de remplissage de l'auge qui soit même inférieure à la hauteur utile la plus faible de remplissage de l'auge.

Selon l'invention, le dispositif d'alimentation d'un filtre rotatif à disques par ruissellement d'une suspension, ladite suspension comportant des phases solides et liquide à séparer au moyen de surfaces filtrantes formées de secteurs dont l'assemblage constitue des disques, lesdits secteurs étant fixés sur un arbre d'entraînement horizontal et creux servant à l'évacuation de la phase liquide et lesdits secteurs plongeant tour à tour dans une auge contenant la suspension, ledit arbre étant muni d'au moins un distributeur fixant l'ordonnancement des étapes de filtration, essorage et soufflage au cours de la rotation, caractérisé en ce que, dans le but de maintenir pour chaque disque le début de l'étape de filtration à la capacité maximale du filtre, quel que soit le niveau de la suspension dans l'auge, le dispositif est muni pour chaque disque de moyens horizontaux de répartition de l'alimentation en suspension par ruissellement qui se composent:

a) de 2 couloirs horizontaux d'alimentation, chacun étant placé le long d'une face du disque en rotation avant immersion dans la suspension et au-dessus du plan horizontal passant par l'axe de rotation de l'arbre (11), chacun étant également raccordé par une extrémité à une même enceinte ou boîte d'alimentation en suspension, à partir de laquelle s'effectue la distribution de la suspension sur chaque face du disque.

b) Chaque couloir étant au moins constitué d'une paroi latérale et d'un fond muni de moyens de réglage permettant, indépendamment du disque en rotation, de régler l'espace entre le fond du couloir et la face correspondante du disque, de manière à répartir sur toute la longueur du secteur filtrant du disque placé en face du fond, la suspension soumise à l'opération de filtration et s'écoulant dans l'auge sous forme d'une lame ruisselante le long de la portion du disque dont la surface est délimitée par la longueur du secteur filtrant et par la distance entre le fond du couloir et le niveau de la suspension.

Ainsi les deux couloirs d'alimentation en suspension par ruissellement permettent de créer une lame de suspension régulièrement répartie au contact de la surface correspondante du disque. L'enceinte ou boîte d'alimentation comportant une entrée et 2 ouvertures de sortie débouchant respectivement dans chaque couloir est munie de moyens de réglage de la répartition uniforme de suspension dans chaque couloir.

L'invention sera mieux comprise grâce à la description des figures 1 à 3.

La figure 1 représente une vue partielle en perspective du dispositif sur un filtre rotatif par ruissellement.

La figure 2 représente une coupe transversale du couloir.

La figure 3 représente une face de disque munie de son couloir montrant le maintien en début de filtration à une hauteur constante quel que soit le niveau de la suspension dans l'auge.

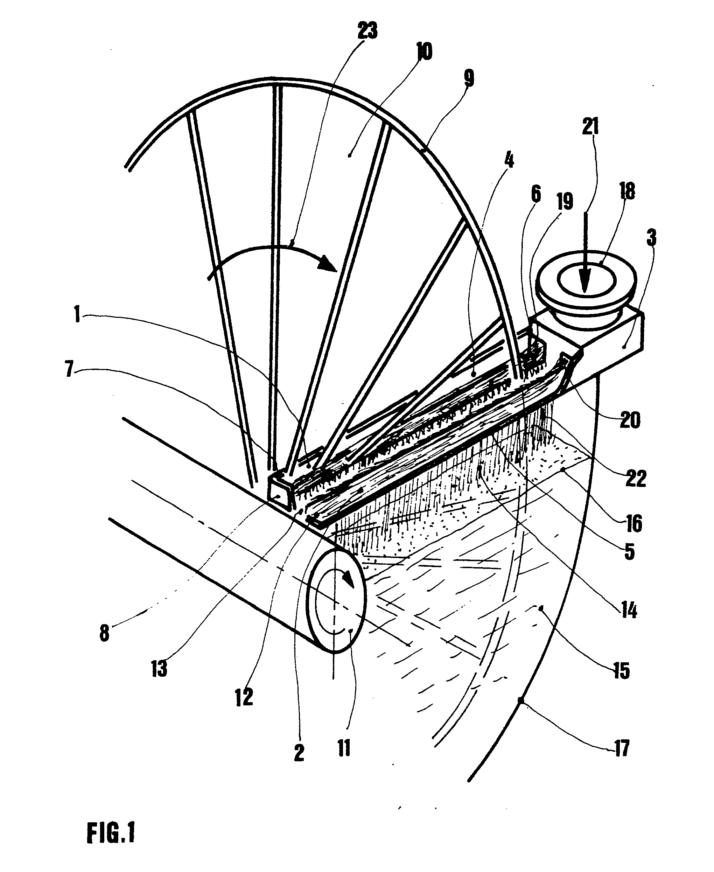

Selon la figure 1, le dispositif selon l'invention permettant l'alimentation par ruissellement d'un filtre rotatif en une suspension dont il faut séparer les phases liquide et solide, se compose de deux couloirs (1) et (2) et d'une boîte d'alimentation (3) disposée en tête des deux couloirs. Chaque couloir est constitué d'une paroi latérale interne (4), d'un fond (5), dont l'une des extrémités (6) est solidairement étanche de la boîte d'alimentation (3), tandis que l'autre extrémité (7) est fermée par une cloison (8). Chaque couloir (1) et (2), disposé de part et d'autre d'un disque (9), formé par les secteurs (10), entraîné par l'arbre creux (11) et muni de leur fond (5) dispose également d'un moyen de réglage (12) d'un espace (13) compris entre les bords dudit moyen de réglage (12) et la paroi du disque (9), permettant la répartition de la suspension sur la portion de disque (14) concernée par l'étape de filtration par ruissellement avant son immersion dans la suspension (15), selon le niveau (16) dans l'auge (17).

Pour chaque disque (9), une caisse d'alimentation (3) en suspension à filtrer est disposée en tête des couloirs (1) et (2) à l'extrémité (6). Cette caisse d'alimentation est munie d'une entrée (18) et de deux ouvertures de sortie (19) et (20), débouchant respectivement dans les couloirs (1) et (2). Les ouvertures des sorties (19) et (20) sont réglables de telle façon que le débit de suspension dans chaque couloir (1) et (2) puisse être réglé d'une manière appropriée à chaque cas d'exploitation.

La suspension soumise à la séparation des phases liquide et solide est introduite selon (21) dans la caisse d'alimentation (3), puis en sort par les ouvertures (19) et (20) pour alimenter les couloirs (1) et (2) situés de part et d'autre du disque (9). La suspension est alors répartie sur les deux faces de la portion du disque (14) concernée par l'étape de filtration par le ruissellement (22) pendant que le disque tourne selon la direction (23) bien avant que la portion (14) du disque soit immergée dans la suspension (15) contenue dans l'auge (17). Ainsi, grâce au dispositif selon l'invention, il devient possible de maintenir, pour chaque disque d'un filtre rotatif, le début de la phase de filtration à une hauteur constante quel que soit le niveau de la suspension dans l'auge.

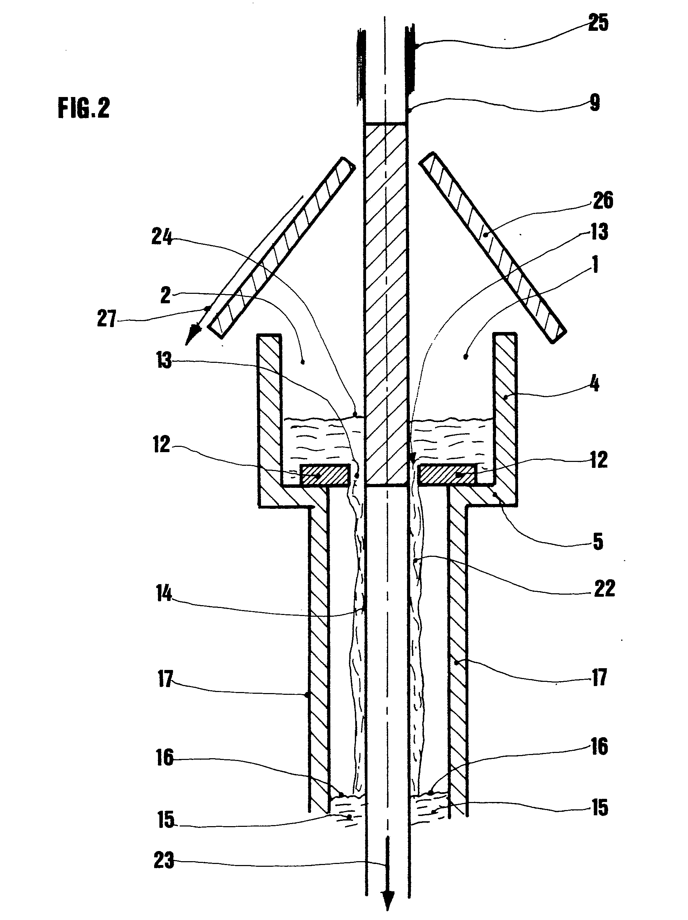

Selon la figure 2, le dispositif selon l'invention d'alimentation par ruissellement des faces d'un disque de filtre rotatif comporte les couloirs (1) et (2) situés de part et d'autre du disque (9).

Chaque couloir est formé d'une paroi latérale externe (4), d'un fond (5) placé à la partie supérieur de l'auge (17).

Les fonds (5) des couloirs (1) et (2) disposent de moyens de réglage (12) de l'espace (13) compris entre les bords desdits moyens de réglage et les faces du disque (9). Ces moyens de réglage (12) permettent de répartir le long des couloirs (1) et (2) la suspension (24) s'écoulant par l'intervalle (13) sous forme d'une lame ruisselante (22) soumise à l'opération de filtration et concernant sur toute la longueur du secteur la surface (14) du disque (9).

Pendant que le disque est entraîné en rotation selon la flèche (23) pour assurer la séparation des phases liquide et solide de la suspension, la phase solide formant la gâteau (25) ayant subi les étapes d'essorage et de soufflage, est dévié par des déflecteurs (26) situés au-dessus des couloirs (1) et (2), et conduit selon la flèche (27) en dehors de l'auge.

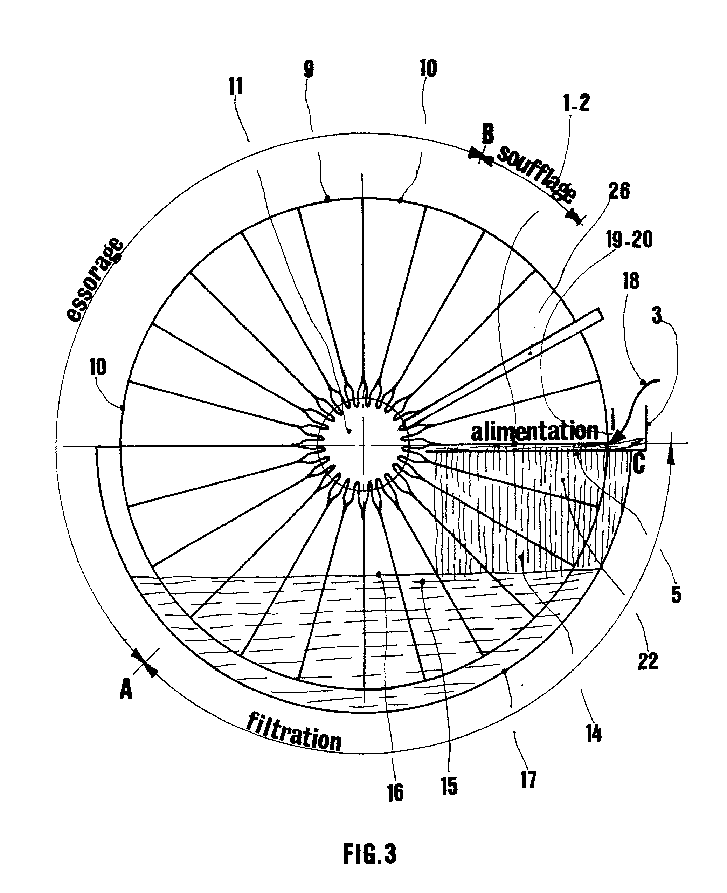

Selon la figure 3, le filtre rotatif est formé de disques filtrants (9) munis de secteurs filtrants (10) de forme trapézoïdale raccordés à l'arbre d'entraînement horizontal et creux (11). Le disque filtrant (9) se situe verticalement dans l'auge (17) contenant la suspension à filtrer (15).

Lorsque le filtre est en fonctionnement, le secteur filtrant passe de la position (A) essorage à la position (B) soufflage, puis à la position (C) amorce de la filtration par séparation des phases liquide et solide de la suspension, grâce à l'alimentation en suspension par ruissellement au moyen du dispositif selon l'invention, avant même que l'immersion du secteur concerné soit faite au sein de la suspension (15) dans l'auge (17).

Ce dispositif comporte une caisse d'alimentation (3), en suspension à filtrer munie de l'entrée (18) et des sorties (19) et (20) débouchant dans les couloirs (1) et (2). Ces couloirs sont formés des parois latérales externes (4) et des fonds (5).

La portion de disque (14) est alimentée (sur chaque face) par le ruissellement (22) de la suspension à filtrer et joue sa fonction de séparation des phases solide et liquide par filtration bien avant que ledit secteur soit (partiellement ou totalement) immergé dans l'auge (17) contenant la suspension à filtrer (15).

A travers cette figure, il est possible de vérifier que, grâce au dispositif selon l'invention, il est possible de maintenir, pour chaque disque du filtre rotatif, le début de la phase de filtration à une hauteur constante quel que soit le niveau (16) de la suspension dans l'auge (17), alors que selon l'art antérieur, la filtration ne peut s'effectuer que quand la totalité du secteur (10) est immergée dans la suspension (15) contenue dans l'auge (17).

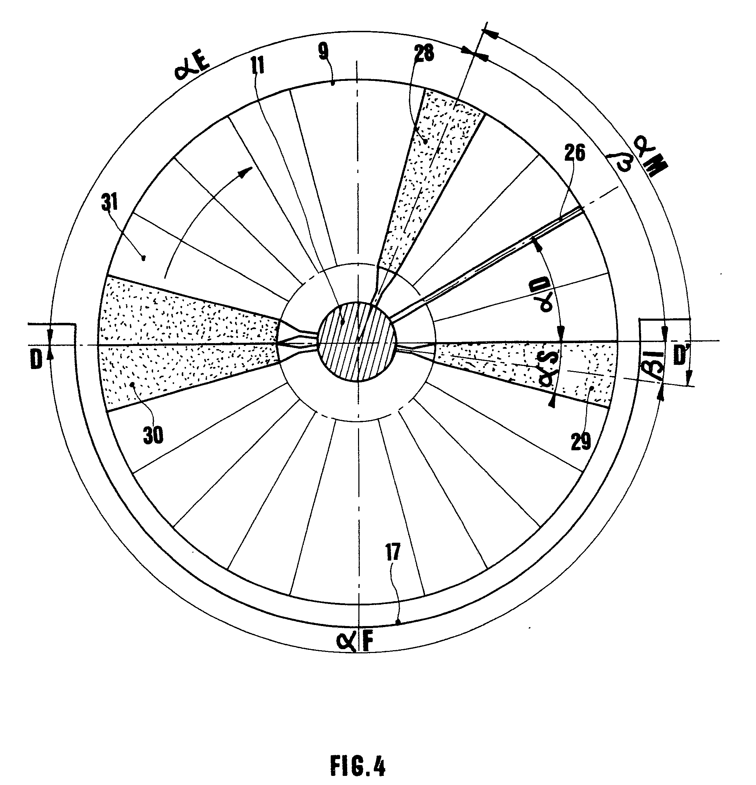

EXEMPLE (selon les figures 4, 5 et 6)

On a étudié et comparé l'objet de l'invention avant (art antérieur) et après modification (invention) d'un filtre rotatif à disques comportant: une auge (17), ayant une capacité de 30 m$^3$, un arbre d'entraînement cylindrique (11) ayant un diamètre de 0,6 mètre comportant sept disques (9) de diamètre 3,9 mètres assurant la séparation des phases liquide et solide d'une suspension aqueuse de $Al(OH)_3$ ayant une concentration en matière sèche de 0,25 tonne par mètre cube.

Chaque disque (9) filtrant est constitué de 24 secteurs représentant chacun un angle $\alpha_S$ de 15° environ sur la surface du disque, délimité par les côtés rayonnant dudit secteur, $\alpha_S$ étant défini par la relation 360°/N où N est le nombre de secteurs formant le disque.

Le support filtrant de chaque secteur confère au disque une surface filtrante délimitée par un rayon externe R égal à 2,0 mètres et un rayon interne de 0,5 mètre.

Dans les trois figures (4, 5 et 6), la position (28) du secteur en début de soufflage a été fixée à un angle β égal à 60° par rapport à l'horizontal DD' en amont de l'étape de filtration.

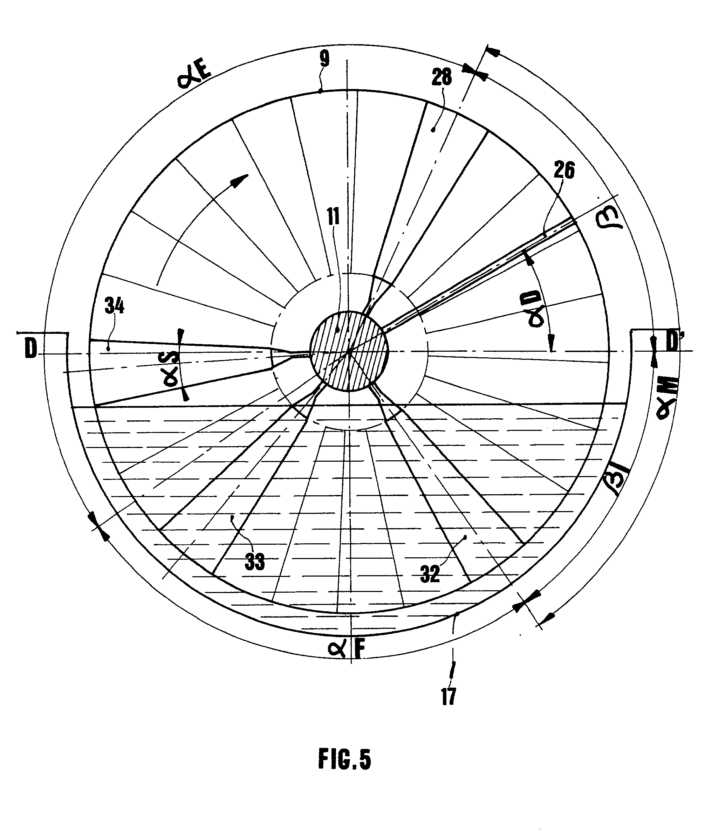

Selon les figures 4 et 5, illustrant l'art antérieur, l'arbre (11) d'entraînement est immergé à 50% (figure 4) et à 35% (figure 5) de sa surface dans la suspension à filtrer.

D'après la figure 4, la position (28) précitée et la position (29) correspondant à l'immersion totale du secteur, c'est-à-dire correspondant au début de l'étape de filtration, alors que le secteur forme un angle $\beta_I$ avec l'axe DD', définissent un angle inactif $\alpha_M$ qui est égale à $(\beta + \beta_I)$.

L'étape de filtration commence à la position (29) lorsque le secteur est complètement immergé et s'achève lorsque le secteur est en position intermédiaire entre la position (30) au moment où le secteur commence à émerger et une position (31) où le secteur est complètement émergé. Cette position moyenne et la position (29) définissent un angle de filtration $\alpha_F$ qui dépend aussi de l'immersion et de l'angle $\alpha_S$ du secteur, $\alpha_F$ étant égal dans ce cas à $(180° - \dfrac{\alpha_S}{2})$.

L'étape d'essorage débute à la position moyenne, entre les positions (30) et (31), c'est-à-dire à la fin de la filtration et s'achève lorsque le secteur est en position (28) (début du soufflage), ces deux positions définissant ainsi un angle d'essorage $\alpha_E$ égal à $(360° - \alpha_F - \alpha_M)$.

Ainsi, ces divers angles ont les valeurs suivantes:

$\alpha_M = \beta + \beta_I = 67,5°$

$\alpha_F = 180° - \beta_I = 172,5°$

$\alpha_E = 360° - \alpha_F - \alpha_M = 120°$

D'après la figure 5, la position (28) précitée et la position (32) correspondant à l'immersion totale du secteur, c'est-à-dire correspondant au début de l'étape de filtration, définissent un angle inactif $\alpha_M$ qui est égal à $(\beta + \beta_I)$, $\beta_I$ étant l'angle défini par l'axe horizontal DD' et la position (32) du secteur quand il est totalement immergé.

L'étape de filtration commence lorsque le secteur est en position (32) de complète immersion et s'achève dans une position médiane, comprise entre la position (33) au moment où le secteur commence à émerger et la position (34) où le secteur est complètement émergé. Cette position médiane et la position (32) définissent l'angle de filtration $\alpha_F$ qui dépend aussi de l'immersion et de l'angle $\alpha_S$ du secteur.

L'étape d'essorage débute à la position médiane entre les positions (33) et (34), c'est-à-dire à la fin de la filtration et s'achève lorsque le secteur est en position (28) (début de soufflage), ces deux positions définissant ainsi un angle d'essorage $\alpha_E$ égale à $(360° - \alpha_F - \alpha_M)$.

Ainsi, ces divers angles ont les valeurs suivantes:

$\alpha_M = \beta + \beta_I = 120°$

$\alpha_F = 148° - \beta_I = 88°$

$\alpha_E = 360° - \alpha_F - \alpha_M = 152°$

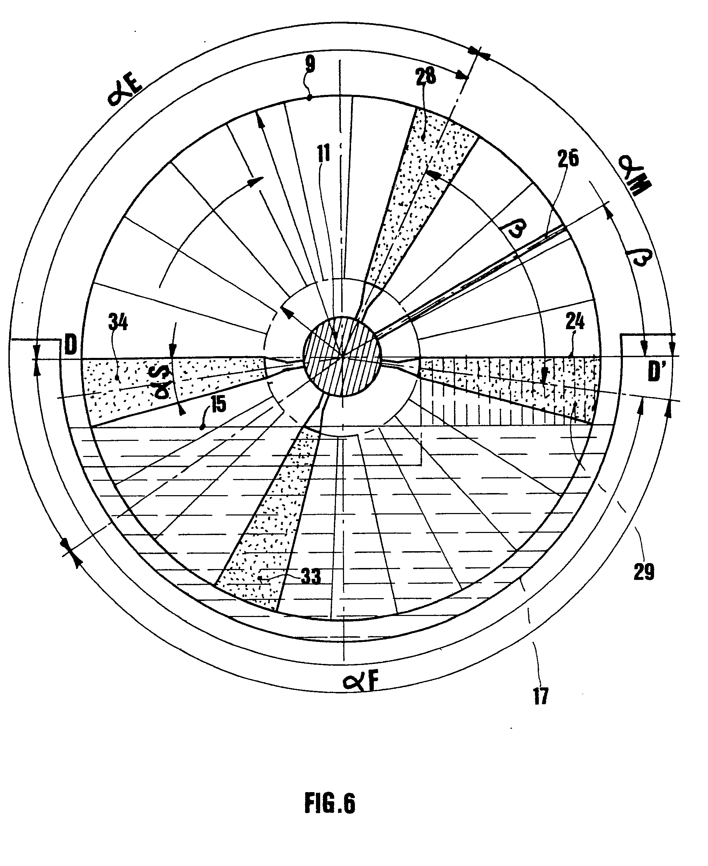

D'après la figure 6, illustrant l'objet de l'invention, le dispositif d'alimentation par ruissellement ne prend effet que si le niveau (15) de la suspension dans l'auge (17) se situe au-dessous du niveau (24) de l'alimentation en suspension par les couloirs (1) et (2) (figures 1 et 2). Le niveau (15) correspond à une immersion de 35% du disque comme dans le cas de la figure 5.

Dans le cas de la figure 6, le dispositif d'alimentation selon l'invention est placé de telle façon que le niveau d'alimentation (24) se situe au niveau de l'axe DD'. Dès lors, l'étape de filtration débute lorsque le secteur est dans la position (29) fixant l'angle $\alpha_M$ qui est égal à $(\beta + \beta_I)$.

L'étape de filtration commence lorsque le secteur atteint la position (29) pour laquelle il est complètement concerné par le ruissellement selon l'invention. Cette étape de filtration s'achève dans une position médiane comprise entre la position (33) au moment où le secteur commence à émerger et la position (34) au moment où le secteur est complètement émergé. Cette position médiane et la position (29) définissent l'angle de filtration $\alpha_F$ qui dépend également de l'immersion et de l'angle $\alpha_S$ du secteur.

Dans le cas de l'invention, le niveau (15) de la suspension dans l'auge, c'est-à-dire le niveau d'immersion du disque, a une influence sur la fin de l'étape de filtration, position médiane entre les positions (33) et (34), mais n'a aucune influence sur le début de filtration, c'est-à-dire sur la position (29), alors qu'il est concerné par le ruissellement.

Ainsi, quelle que soit l'importance de l'immersion, l'angle $\alpha_M$ est constant et de ce fait, la somme des angles productifs $\alpha_F$ et $\alpha_E$ reste constante, alors que dans l'art antérieur (figures 4 et 5), l'angle $\alpha_M$ et la somme des angles $\alpha_F$ et $\alpha_E$ varient selon l'importance de cette immersion.

Ainsi, selon l'invention, les divers angles ont les valeurs suivantes:

$\alpha_M = \beta + \beta_I = 67,5°$

$\alpha_F = 148° - 7,5° = 140,5°$

$\alpha_E = 360° - \alpha_F - \alpha_M = 152°$

Dans le cas particulier de l'invention, où le niveau (15) dans l'auge (17) atteindrait le niveau d'alimentation (24) des couloirs (1) et (2) du dispositif selon l'invention, l'effet du ruissellement sur le disque est neutralisé par l'immersion et l'on est ramené au cas de la figure 4, entraînant pour les

angles $\alpha_M$, $\alpha_F$ et $\alpha_E$ une égalité avec ceux de la figure 4.

Pour une immersion inférieure à 35%, lorsque la partie de secteur située près de l'arbre n'est plus immergée, c'est-à-dire passant au-dessus du niveau de la suspension dans l'auge, cette partie non immergée n'entraîne pas, comme dans l'art antérieur, la rupture du vide car elle a été garnie de phase solide lors de son passage dans la zone de ruissellement située entre le niveau de la suspension dans l'auge et le niveau de l'alimentation (24).

Toutes les valeurs des angles $\alpha_M$, $\alpha_F$, $\alpha_E$ et de leur somme $\alpha_F + \alpha_E$ ont été consignées dans le tableau ci-après, pour permettre une comparaison entre l'art antérieur et l'objet de l'invention.

Tableau I

| Angles | Art antérieur | Invention |
|---|---|---|
| | Figure 4<br>Immersion à 50% de l'arbre<br>d'entraînement | Immersion à 50% de l'arbre d'entraînement équivalent à la figure 4 |
| $\alpha_M$ | 67,5° | 67,5° |
| $\alpha_F$ | 172,5° | 172,5° |
| $\alpha_E$ | 120° | 120° |
| $\alpha_F + \alpha_E$ | 292,5° | 292,5° |
| | Figure 5<br>Immersion à 35% de l'arbre<br>d'entraînement | Figure 6<br>Immersion a 35% de l'arbre d'entraînement |
| $\alpha_M$ | 120° | 67,5° |
| $\alpha_F$ | 88° | 140,5° |
| $\alpha_E$ | 152° | 152° |
| $\alpha_F + \alpha_E$ | 240° | 292,5° |

Ainsi, ce tableau révèle que:
– dans le cas de l'art antérieur, on constate que les angles $\alpha_F$ et $\alpha_E$ varient selon la valeur de l'immersion, ce qui est bien connu, alors que l'angle $\alpha_M$ augmente d'une manière conséquente quand le niveau de suspension dans l'auge diminue, entraînant une diminution de la productivité du filtre, puisque la somme ($\alpha_F + \alpha_E$) décroît simultanément avec la diminution de l'immersion,
– dans le cas de l'invention, l'angle $\alpha_M$ est constant quel que soit le niveau de suspension dans l'auge, alors que les angles $\alpha_F$ et $\alpha_E$ varient selon ce niveau comme dans l'art antérieur, tout en conservant pour la somme ($\alpha_F + \alpha_E$) une valeur au moins égale à celle de l'art antérieur lorsque l'immersion est maximale (c'est-à-dire 50%). Cette somme ($\alpha_F + \alpha_E$) reste maximale lorsque le niveau d'immersion est inférieur à 50% et reste constante dans le cas de l'invention alors qu'elle diminue simultanément avec l'immersion dans le cas de l'art antérieur.

Comme cela a déjà été exprimé, une baisse accidentelle de niveau dans l'auge du filtre au-dessous d'une limite fixée par la partie filtrante du secteur provoque, dans le cas de l'art antérieur, une rupture du vide du fait que la zone filtrante du secteur située près de l'arbre n'est plus immergée, alors que dans l'invention, une baisse accidentelle de même importance de niveau dans l'auge ne provoque pas la rupture du vide puisque la zone filtrante non immergée du secteur a été préalablement recouverte par la phase solide au moment où ce secteur passait dans la zone de ruissellement.

Il découle de cette particularité qu'il est possible de faire varier volontairement le niveau de la suspension dans l'auge pour faire varier les angles $\alpha_F$ et $\alpha_E$ sans avoir à intervenir sur le distributeur du filtre, alors que cette intervention est indispensable dans le cas de l'art antérieur en provoquant simultanément une variation de l'angle $\alpha_M$.

**Revendications**

1. Dispositif d'alimentation par ruissellement d'un filtre rotatif pour séparer les phases solide et liquide d'une suspension au moyen de surfaces filtrantes formées de secteurs (10) dont l'assemblage constitue des disques (9), les secteurs étant fixés sur un arbre d'entraînement (11) horizontal et creux servant à l'évacuation de la phase liquide et plongeant tour à tour dans une auge (17) contenant la suspension, l'arbre d'entraînement (11) étant muni d'au moins un distributeur fixant l'ordonnancement des étapes de filtration, essorage et soufflage au cours de la rotation, caractérisé en ce que, dans le but de maintenir pour chaque disque le début de l'étape de filtration à la capacité maximale du filtre, quel que soit le niveau de la suspension dans l'auge, le dispositif est muni pour chaque disque (9) de moyens horizontaux de répartition de l'alimentation en suspension par ruissellement, composés:
a) de deux couloirs (1) et (2) horizontaux d'alimentation, chacun étant placé de long d'une face du disque (9) en rotation avant immersion dans la suspension et au-dessus du plan horizontal passant par l'axe de rotation de l'arbre (11), chacun étant également raccordé par une extrémité à une même enceinte ou boîte d'alimentation (3) en suspension, à partir de laquelle s'effectue la distribution de la suspension sur chaque face du disque.

b) Chaque couloir étant au moins constitué d'une paroi latérale (4) et d'un fond (5) muni de moyens de réglage (12) permettant, indépendamment du disque (9) en rotation, de régler l'espace (13) entre le fond (5) du couloir et la face correspondante du disque (9) de manière à répartir sur toute la longueur du secteur filtrant (10) du disque placé en face du fond (5), la suspension soumise à l'opération de filtration et s'écoulant dans l'auge (17) sous forme d'une lame ruisselante (22) le long de la portion (14) du disque, dont la surface est délimitée par la longueur du secteur filtrant (10) et par la distance entre le fond (5) du couloir et le niveau (16) de la suspension.

2. Dispositif d'alimentation en suspension par ruissellement d'un filtre rotatif selon revendication 1, caractérisé en ce que l'enceinte (3) d'alimentation est munie d'une entrée (18) et deux ouvertures de sortie (19) et (20) débouchant respectivement dans chaque couloir (1) et (2).

3. Dispositif d'alimentation en suspension par ruissellement d'un filtre rotatif selon revendication 1 ou 2, caractérisé en ce que l'enceinte (3) d'alimentation en suspension, placée en tête de chaque couple de couloirs (1) et (2), est munie de moyens de réglage de la répartition uniforme de la suspension dans chaque couloir.

4. Dispositif d'alimentation en suspension par ruissellement d'un filtre rotatif selon revendication 1 ou 2, caractérisé en ce que des déflecteurs (26) assurant l'évacuation du gâteau (25) sont placés au-dessus des couloirs (1) et (2).

**Claims**

1. Stream-down feeding apparatus with a suspension, for rotating-disc filters, to separate the solid and liquid phases thereof by means of filtering surfaces formed by sectors (10) which are assembled to constitute discs (9), the sectors being fixed on a hollow horizontal drive shaft (11) serving for discharge of the liquid phase and the sectors dipping in turn into a trough (17) containing the suspension; the drive-shaft (11) being provided with at least one distributor means for fixing the sequence of filtration draining, and blowing steps in the course of the rotary movement characterized in that in order that, for each disc, the beginning of the filtration step is maintained at the maximum capacity of the filter, irrespective of the level of the suspension in the trough, the apparatus is provided, for each disc (9) with horizontal means for distributing the feed of the streaming down suspension, said means comprising:

a) Two horizontal feed channels (1) and (2), each being disposed along a face of the rotating disc (9) before dipping in the suspension and above the horizontal plane passing through the axis of rotation of the shaft (11), each channel being also connected to the same suspension feed chamber or tank (3) from which the suspension is distributed over each face of the disc.

b) Each channel being at least formed by a side wall (4) and a floor (5) which is provided with adjusting means (12) for adjusting, independently of rotating disc (9), the space (13) between the floor (5) of the channel and the respective surface of the disc (9) so that the suspension is distributed along the entire lenght of the filtering sector (10) of the disc, opposite the floor (5), said suspension to be filtered flowing into the trough (17) in the form of a trickle flow sheet of liquid (22) over the disc portion (14) the surface of which is delimited by the lenght of the filtering sector (14) and the distance between the floor (5) of the channel and the level (16) of the suspension.

2. Stream-down feeding apparatus with suspension, for rotating disc filters, according to claim 1 characterized in that the feed chamber (3) is provided with one intake (18) and two outlet openings (19) and (20) which respectively open into each channel (1) and (2).

3. Stream-down feeding apparatus with suspension, for rotating disc filters according to claim 1 or 2 characterized in that the suspension feed chamber (3) which is disposed at the head end of each pair of channels (1) (2) is provided with means for regulating the uniform distribution of the suspension in each channel.

4. Stream-down feeding apparatus with suspension for rotating disc filters according to claim 1 or 2 characterized in that deflectors (26) providing for discharge of the cake (25) are positionned above the channels (1) (2).

**Patentansprüche**

1. Rieselzuleitungsvorrichtung für einen Drehfilter zum Trennen der festen und flüssigen Phasen einer Suspension mittels filtrierender Oberflächen, die aus Sektoren (10) gebildet sind, deren Vereinigung Scheiben (9) darstellt, wobei die Sektoren an einer horizontalen und hohlen Antriebswelle (11) befestigt sind, die der Ableitung der flüssigen Phase dient, und von Umdrehung zu Umdrehung in einen die Suspension enthaltenden Trog (17) eintauchen, und wobei die Antriebswelle (11) mit wenigstens einem Verteiler versehen ist, der die Abfolge der Filtrier-, Entwässerungs- und Blasstufen im Lauf der Rotation festlegt, dadurch gekennzeichnet, dass die Vorrichtung zu dem Zweck, für jede Scheibe den Beginn der Filtrierstufe bei der Maximalkapazität des Filters zu halten, welches auch immer das Niveau der Suspension im Trog sei, für jede Scheibe (9) mit horizontalen Verteilungsmitteln der Suspensionsrieselzuleitung ausgerüstet ist, die

a) aus zwei horizontalen Zuleitungsdurchgängen (1) und (2) bestehen, deren jeder längs einer Fläche der rotierenden Scheibe (9) vor Eintauchen in die Suspension und oberhalb der durch die Drehachse der Welle (11) gehenden Ebene angeordnet ist, wobei jeder gleichfalls mit einem gleichen Zuleitungsbehälter oder -gefäss (3) verbunden ist, von dem aus die Verteilung der Suspension auf jede Fläche der Scheibe erfolgt, wobei

b) jeder Durchgang wenigstens aus einer Seitenwand (4) und einem mit Regelungsmitteln (12) ausgerüsteten Boden (5) besteht, die unabhängig von der rotierenden Scheibe (9) eine Regulierung des Zwischenraumes (13) zwischen dem Boden (5) des Durchgangs und der entsprechenden Fläche der Scheibe (9) derart gestatten, dass auf der gesamten Länge des filtrierenden Sektors (10) der dem Boden (5) zugewandt angeordneten Scheibe die dem Filtriervorgang unterworfene Suspension verteilt wird und in Form einer rieselnden Lamelle (22) längs des Teils (14) der Scheibe strömt, dessen Oberfläche durch die Länge des filtrierenden Sektors (10) und durch den Abstand zwischen dem Boden (5) des Durchgangs und dem Niveau (16) der Suspension begrenzt ist.

2. Suspensions-Rieselzuleitungsvorrichtung eines Drehfilters nach Anspruch 1, dadurch gekennzeichnet, dass der Zuleitungsbehälter (3) mit einem Einlass (18) und zwei Auslassöffnungen (19) und (20) versehen ist, die in jedem Durchgang (1) bzw. (2) münden.

3. Suspensions-Rieselzuleitungsvorrichtung eines Drehfilters nach Anspruch 1 oder 2, dadurch gekennzeichnet, dass der Suspensionszuleitungsbehälter (3), der am Kopf jedes Paares von Durchgängen (1) und (2) angeordnet ist, mit Regulierungsmitteln zur gleichmässigen Verteilung der Suspension in jeden Durchgang ausgerüstet ist.

4. Suspensions-Rieselzuleitungsvorrichtung eines Drehfilters nach Anspruch 1 oder 2, dadurch gekennzeichnet, dass Ablenkplatten (26), die die Abführung des Filterkuchens (25) sichern, oberhalb der Durchgänge (1) und (2) angebracht sind.

**FIG.1**

**FIG.2**

FIG.3

FIG.4

FIG.5

**FIG.6**